# EUROPÄISCHE PATENTSCHRIFT

(11) **EP 2 570 926 B1**
(45) Veröffentlichungstag und Bekanntmachung des Hinweises auf die Patenterteilung: **22.10.2014**
(21) Anmeldenummer: 12184474.0
(22) Anmeldetag: 14.09.2012
(51) Int. Cl.: G06F 11/14

(54) **Datensicherungsverfahren und Datensicherungsvorrichtung**
Data backup method and data backup apparatus
Procédé de sécurisation des données et dispositif de sécurisation des données

(30) Priorität: 14.09.2011 DE 102011053614
(43) Veröffentlichungstag der Anmeldung: 20.03.2013
(60) Teilanmeldung: 14158003.5
(73) Patentinhaber: Ivastsuk-Kienbaum, Jurij, 86179 Augsburg (DE)
(72) Erfinder: Ivastsuk-Kienbaum, Jurij, 86179 Augsburg (DE)
(74) Vertreter: Charrier, Rapp & Liebau

(56) Entgegenhaltungen:
- EP-A1- 1 168 174
- EP-A1- 1 914 628
- US-A1- 2005 010 835
- US-A1- 2006 200 639
- US-A1- 2008 115 071
- US-A1- 2010 037 092

## Beschreibung

Die Erfindung betrifft ein Datensicherungsverfahren nach dem Oberbegriff des Anspruchs 1 und eine Datensicherungsvorrichtung.

Bekannte Datensicherungsverfahren und -vorrichtungen für die Sicherung von Inhalten der Festplatten von Rechnern, wie sie insbesondere von privaten Rechnerbenutzern von Windows-, Apple- oder Linux-Rechner verwendet werden, erfordern üblicherweise die Installation und Konfiguration eines Sicherungsprogramms in das Betriebssystem des Rechners. Damit wird das Datensicherungsprogramm üblicherweise fest in das Betriebssystem des Rechners integriert. Wird das Betriebssystem des Rechners beschädigt, so das es nicht mehr lauffähig ist, kann der Benutzer folglich das installierte Wiederherstellungsprogramm nicht mehr starten. Man ist gezwungen solche Hilfsmittel wie Boot-CD oder "Startup Recovery Manager" zu benutzen damit man die verlorengegangene Lauffähigkeit des Betriebssystem wiederherstellen kann. Dabei ist man ausschließlich auf die per Hand angeleitete Wiederherstellung angewiesen, die Möglichkeit einer automatischen Ausführung geht dabei völlig verloren. Dies ist gerade für Rechnerbenutzer mit wenig Erfahrungen und Kenntnissen der Technik von Rechnern und Festplatten schwierig, da hier oft Angaben abgefragt werden, die er nicht kennt. Zudem muss für jedes Betriebssystem und ggf. auch unterschiedliche Betriebssystemversionen eines Betriebssystems eine eigene Version des Sicherungsprogramms erstellt werden. Auch hier ergeben sich gerade für den unerfahrenen Rechnerbenutzer oft kaum überwindbare Schwierigkeiten bei der Auswahl des zu installierenden Sicherungsprogramms. Erwirbt der Rechnerbenutzer nur eine für das Betriebssystem seines Rechners geeignete Version des Sicherungsprogramms, so kann er dies bei einer Umstellung auf ein anderes Betriebssystem nicht mehr verwenden.

Es besteht folglich der Wunsch, eine Datensicherung bzw. Datenwiederherstellung gerade für den unerfahrenen Anwender so einfach wie möglich zu gestalten, ohne dass sich dieser über spezielle Eigenschaften seines Rechners oder Betriebssystems Gedanken machen muss. Das benutzerfreundliche Datensicherungsverfahren/-Vorrichtung soll deshalb die Möglichkeit haben, sogar wenn das Betriebssystem des Rechners nicht mehr lauffähig ist, voll automatisch und ohne Benutzereingaben zu funktionieren. Dabei soll die Datensicherung auch bei einem Wechsel zu einem anderen Betriebssystem oder einer anderen Betriebssystemversion ohne Änderungen des Datensicherungsprogramms und/oder in der Bedienung der Datensicherung für den Anwender ermöglicht werden. Der Anwender kann die Datensicherung dann in gewohnter Weise verwenden.

Einen Versuch dieser Vereinfachung offenbart die DE 20 2006 000 075 U1, die ein USB-Datensicherungssystem mit einem Hostrechner betrifft. Auf dem Hostrechner ist ein Datensicherungsapplikationsprogramm vorhanden, wobei er einerseits mit einer USB-Brücke mit einem Druckknopf und andererseits mit einer Festplatte verbunden ist. Die USB-Brücke weist eine virtuelle Festplatte auf, welche nur vom Betriebssystem geprüft und gelesen werden kann. Wird der Druckknopf gedrückt, so werden die Daten des Hostrechners durch das Datensicherungsapplikationsprogramm auf einem anderen Speichersystem gespeichert, z.B. der Festplatte. Zwar wird hier durch den Druckknopf der Start der Sicherung vereinfacht, jedoch muss auch hier das Datensicherungsapplikationsprogramm betriebssystemabhängig auf dem Rechner installiert werden. Vor der ersten Sicherung muss der Anwender dort konfigurieren, welche Dateipfade sowohl für die Sicherungsquelle als auch für das Sicherungsziel gewählt werden. Bereits hierdurch sind viele Anwender überfordert. Und wenn das Betriebssystem des Rechners nicht mehr läuft, ist die Wiederherstellung der Daten dort gar nicht mehr möglich.

Die DE 10 2004 055 956 A1 betrifft ein Speichermedium und ein Verfahren zur Datensicherung, wobei das als CD oder DVD ausgebildete Speichermedium ein Sicherungsmodul enthält. Zur vereinfachten Datensicherung kann das Sicherungsmodul durch das Betriebssystem des Rechners aktiviert werden, beispielsweise um eine regelmäßige Datensicherung durchzuführen. Auch hier erfolgt die Datensicherung betriebssystemabhängig mit den oben aufgeführten Nachteilen. Auch hier sind vor der ersten Sicherung umfangreiche Konfigurationsschritte notwendig, welche gerade den unerfahrenen Anwender regelmäßig vor Probleme stellen.

Den Wechsel zu einem anderen Betriebssystem oder einer Betriebssystemversion ohne Änderungen des Datensicherungsprogramms und/oder in der Bedienung der Datensicherung, sowie die Ausführung der Sicherung und/oder Wiederherstellung beim nicht funktionierenden Betriebssystem ermöglichen obige Lösungen für den Anwender nicht.

Aufgabe der Erfindung ist es deshalb, die oben genannten Nachteile zu überwinden und ein Datensicherungsverfahren und eine Datensicherungsvorrichtung bereitzustellen, die eine einfache, schnelle, automatische, insbesondere vollautomatische und benutzerfreundliche Datensicherung und/oder Datenwiederherstellung unabhängig vom Betriebssystem des Rechners und selbst bei nicht lauffähigem Betriebssystem des Rechners ermöglichen.

Die US 2006/0200639 sowie die US 2005/0010835 offenbaren Beispiele hierfür.

Die Erfindung löst diese Aufgabe durch ein Datensicherungsverfahren mit den Merkmalen des Anspruchs 1 und eine Datensicherungsvorrichtung mit den Merkmalen des Anspruchs 10. Bevorzugte Ausführungen und vorteilhafte Weiterbildungen der Erfindung sind in den Unteransprüchen angegeben.

Ein eingangs genanntes Datensicherungsverfahren umfasst die Schritte: a) Starten des Rechners, b) Aufrufen des Sicherungsbetriebssystems durch das Grundbetriebssystem, c) Aufrufen des Datensicherungsprogramm durch das Sicherungsbetriebssystems, und d) Sichern der zu sichernden Daten von dem Festspeicher auf das Speichermedium oder Wiederherstellung von auf dem Speichermedium der Datensicherungsvorrichtung gesicherten Daten des Festspeichers auf den Festspeicher des Rechners. Insbesondere kann vorteilhaft vor Schritt a) die Datensicherungsvorrichtung an den Rechner angeschlossen werden.

Vorteilhaft kann dabei nach Schritt c) in der Datensicherungsvorrichtung ein Sicherungsprofil mit Parametern für die Datensicherung gesucht werden, wobei weiter vorteilhaft einer der Parameter mindestens eine Sicherungsquelle ist, von der Daten gesichert werden sollen, und ein weiterer der Parameter das Speichermedium als Sicherungsziel ist, auf das die zu sichernden Daten gesichert werden sollen.

In einer vorteilhaften Weiterbildung kann die Sicherungsquelle bestimmt werden durch Bestimmen von Parametern des Festspeichers bzw. seiner Speicherbereiche und der darauf gespeicherten Daten, Zuordnen von Wertungsmerkmalen zu diesen Parametern und anschließend Auswählen der Sicherungsquelle anhand aus den Wertungsmerkmalen gebildeten Wertungssummen. Diese Bestimmung kann insbesondere dann vonnöten sein, wenn der Rechner einen auf mehrere physikalische Speichermedien verteilten Festspeicher oder mehrere Speicherbereiche auf einem als ein physikalisches Speichermedium ausgebildeten Festspeicher aufweist, wobei das bzw. die Speichermedien bevorzugt Festplatten und die Speicherbereiche bevorzugt Partitionen sein können.

Bevorzugt können die Parameter die Anzahl und Größe des Festspeichers, insbesondere die Anzahl und Größe von Festplatten, auf dem Festspeicher gespeicherte Herstellerangaben, die Schnittstelle, über die der oder die Festspeichers im Rechner verbunden ist bzw. sind, z. B ATA (IDE, EIDE), Serial-ATA, e-SATA, IEEE 1394 (Firewire), SCSI, Anzahl und Größe der auf dem Festspeicher befindlichen Speicherbereiche, insbesondere Partitionen, das Dateisystem des Festspeicher bzw. der Speicherbereiche, und/oder auf dem Festspeicher gespeicherte, für ein bestimmtes Betriebssystem oder eine Betriebssystemversion charakteristische Dateinamen und/oder Dateiinhalte sein. Jedem dieser Parameter wird, ggf. für jedes verteilte Speichermedium und/oder Partition, eine Wertungszahl zugewiesen und abschließend dann für jedes verteilte Speichermedium und/oder Partition eine Wertungssumme erstellt, wobei dann als Sicherungsquelle das Speichermedium bzw. Partition ausgewählt wird, welches die höchste Wertungssumme aufweist.

Bevorzugt wird als Sicherungsquelle der Festspeicher und/oder Speicherbereich ausgewählt, der das Betriebssystem des Rechners enthält.

Weiter kann vorteilhaft in Schritt d) vor dem Sichern oder der Wiederherstellung die zu sichernden bzw. wiederherzustellenden Daten automatisch erkannt werden, und/oder die für die Sicherung bzw. Wiederherstellung benötigten weiteren Parameter automatisch ermittelt werden, und/oder die Parameter auf ihr Konsistenz überprüft werden.

Für den Fall, dass kein Sicherungsprofil gefunden wird, kann vorteilhaft das Datensicherungsprogramm den Rechner analysieren und mit den dabei ermittelten Parametern, insbesondere der Sicherungsquelle und dem Sicherungsziel, bevorzugt automatisch, ein Sicherungsprofil erstellen.

Weiter kann vorteilhaft für den Fall der Sicherung in Schritt d) nach oder während Schritt d) die Sicherung geprüft werden und für den Fall einer nicht erfolgreichen Sicherung eine Fehlermeldung ausgegeben und/oder ein Fehlerprotokoll erstellt werden. Auch können vorteilhaft während der Sicherung, die im Schritt d) gestartet ist, die gesicherten Daten laufend auf ihre Konsistenz überprüft werden. Bei einer Inkonsistenz der gesicherten Daten wird die Sicherung gestoppt, eine Fehlermeldung wird ausgegeben und/oder ein Fehlerprotokoll wird erstellt.

Bevorzugt kann, nach erfolgreicher Sicherung bzw. Wiederherstellung nach oder während Schritt d) oder nach erfolgter Ausgabe einer Fehlermeldung und/oder Erstellung eines Fehlerprotokolls, der Rechner heruntergefahren werden.

Vorteilhaft kann vor Schritt d) das Sicherungsprofil auf Eignung für die Durchführung der Sicherung geprüft werden, wobei bei Nichteignung Schritt d) nicht durchgeführt wird, sondern eine Fehlermeldung ausgegeben, ein Fehlerprotokoll erstellt und/oder der Rechner heruntergefahren wird.

Vorteilhaft kann im Grundbetriebssystem des Rechners die Datensicherungsvorrichtung als erstes Bootmedium eingestellt sein.

Vorteilhaft kann für den Fall der Datenwiederherstellung in Schritt d) nach Schritt c) in der Datensicherungsvorrichtung ein Wiederherstellungsprofil mit Parametern für die Datenwiederherstellung gesucht und/oder ausgewertet werden. Wird das Wiederherstellungsprofil gefunden, kann es vorteilhaft auf Eignung für eine Datenwiederherstellung geprüft werden. Dabei kann vorteilhaft geprüft werden, ob das im Wiederherstellungsprofil gespeicherte Wiederherstellungsziel auf dem Festspeicher des Rechners vorhanden ist und/oder ob die Parameter des Wiederherstellungsprofils in Ordnung sind. Vorteilhaft kann eine Seriennummer des Festspeichers im Wiederherstellungsprofil gespeichert sein, um den Festspeichers eindeutig als Wiederherstellungsziel erkennen und/oder festlegen zu können. Anschließend kann vorteilhaft überprüft werden, ob die Wiederherstellung erfolgreich war, und im positiven Fall kann der Rechner automatisch heruntergefahren werden.

Falls kein Wiederherstellungsprofil gefunden, es als nicht geeignet erachtet wird oder die Wiederherstellung nicht erfolgreich war, kann eine Fehlermeldung ausgegeben, ein Fehlerprotokoll erstellt und/oder der Rechner heruntergefahren werden.

Bevorzugt kann das Datensicherungsverfahren unter Verwendung einer erfindungsgemäßen und nachfolgend beschriebenen Datensicherungsvorrichtung durchgeführt werden.

Erfindungsgemäß ist eine Datensicherungsvorrichtung ausgestattet mit einer Schnittstelle zur Verbindung mit einem Rechner mit einem Festspeicher, von dem Daten gesichert oder auf den Daten wiederhergestellt werden sollen. Weiter weist die Datensicherungsvorrichtung ein beschreibbares Speichermedium mit einem Startspeicherbereich mit einem darin gespeicherten Urlader, einem Systemspeicherbereich mit darin gespeichertem Sicherungsbetriebssystem und Datensicherungsprogramm, und einem Datenspeicherbereich zur Speicherung der von dem Rechner zu sichernden Daten auf, wobei der Urlader eingerichtet ist, auf Anforderung eines Grundbetriebssystems des Rechners beim Starten des Rechners das Sicherungsbetriebssystem in den Rechner zu laden, und das Sicherungsbetriebssystem zum automatischen Aufrufen des Datensicherungsprogramms eingerichtet ist, und wobei das Datensicherungsprogramm zum automatischen Sichern der Daten des Festspeichers des Rechners in den Datenspeicherbereich oder zum automatischen Wiederherstellen von auf dem Speichermedium gesicherten Daten des Festspeichers auf den Festspeicher des Rechners eingerichtet ist. Vorteilhaft werden die zu sichernden Daten als sogenanntes Speicherabbild gespeichert bzw. archiviert.

Eine vorteilhafte Ausführung der Datensicherungsvorrichtung sieht vor, dass das Speichermedium in einen Master-Boot-Record als Startspeicherbereich, eine Systempartition als Systemspeicherbereich und mindestens eine Datenpartition als Datenspeicherbereich aufgeteilt ist. Hierdurch kann für die vollautomatische Sicherung auf einfache Weise im Master-Boot-Record die Systempartition als Startpartition für das Sicherungsbetriebssystem und, insbesondere in dem Datensicherungsprogramm, die Datenpartition als Datenspeicherbereich für die Sicherung festgelegt werden. Dabei kann, in einer vorteilhaften Weiterbildung der Erfindung, in dem Speichermedium zusätzlich ein Auslagerungsspeicherbereich, insbesondere eine Auslagerungspartition, zur Erweiterung des Arbeitsspeichers des Rechners vorgesehen sein. Damit kann bei fehlendem oder zu kleinem Arbeitsspeicher und/oder Auslagerungsspeicher des Rechners, die Datensicherung und/oder Datenwiederherstellung dennoch durchgeführt und/oder beschleunigt werden.

Bevorzugt kann im Sicherungsbetriebssystem oder Datensicherungsprogramm der Datenspeicherbereich als Sicherungsziel für die zu sichernden Daten des Festspeichers des Rechners voreingestellt sein.

Vorteilhaft kann ein Datensicherungssystem einen Rechner mit einem Festspeicher, von dem Daten gesichert oder auf den Daten wiederhergestellt werden sollen, und einem Grundbetriebssystem, welches beim Starten des Rechners zum Laden eines Betriebssystem ausgebildet ist, aufweisen, wobei an den Rechner eine oben und nachfolgend beschriebene erfindungsgemäße Datensicherungsvorrichtung angeschlossen ist. Vorteilhaft kann in dem Grundbetriebssystem des Rechners die Datensicherungsvorrichtung als erstes Bootmedium eingestellt sein.

Nachfolgend wird ein bevorzugtes Ausführungsbeispiel der Erfindung anhand der begleitenden Zeichnungen detailliert beschrieben. Dabei zeigt
- **Fig. 1**: eine schematische Darstellung eines zu sichernden Rechners mit daran angeschlossener erfindungsgemäßen Datensicherungsvorrichtung;
- **Fig. 2**: eine schematische Darstellung der Datensicherungsvorrichtung aus Fig. 1;
- **Fig. 3**: ein Ablaufdiagram für einen vollautomatischen Sicherungsvorgang gemäß des erfindungsgemäßen Datensicherungsverfahrens.
- **Fig. 4**: ein Ablaufdiagram für einen vollautomatischen Wiederherstellungsvorgang des erfindungsgemäßen Datensicherungsverfahrens.

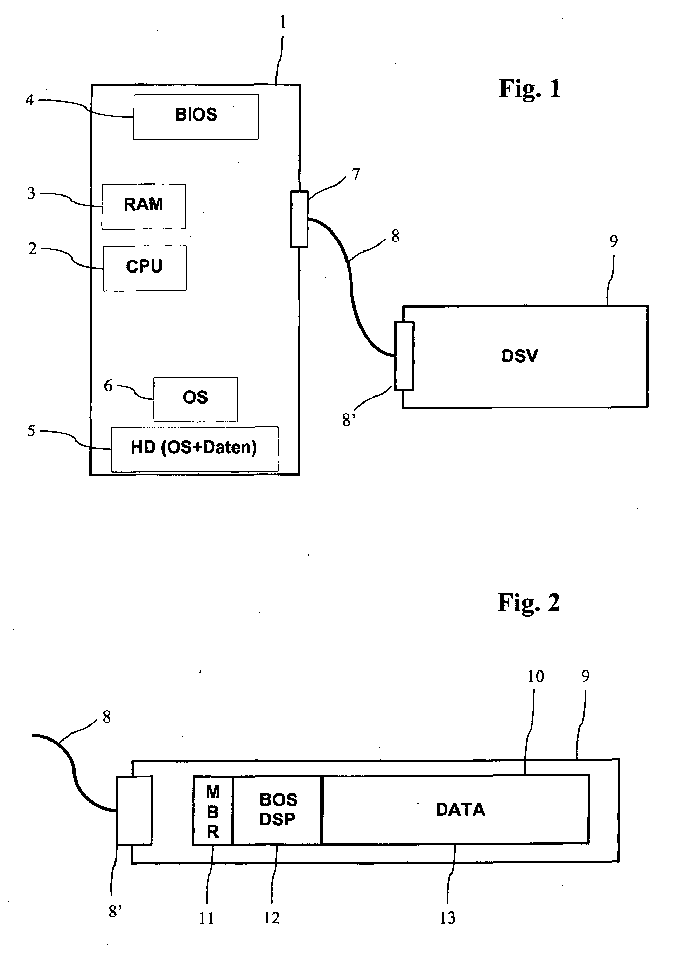

Fig. 1 zeigt eine schematische Darstellung eines an sich bekannten Rechners, beispielsweise eines Windows-PC, mit für seinen Betrieb maßgeblichen Hard- und Softwarekomponenten. Der Aufbau und die Struktur des Rechners 1 ist dem Fachmann hinlänglich bekannt, weshalb auf detaillierte Ausführungen hierzu verzichtet wird. Anstelle eines Windows-PC können aber auch Rechner anderen Typs mit anderen Betriebssystemen verwendet werden, sofern sie das Booten des Rechners von einer externen Betriebssystemquelle zulassen.

Der Rechner 1 weist eine zentrale Recheneinheit 2 (CPU), einen flüchtigen Arbeitsspeicher 3 (RAM) und ein in einem nichtflüchtigen Speicher gespeichertes Grundbetriebssystem 4 (BIOS) auf. Das Grundbetriebssystem 4 wird beim Starten des Rechners 1 ausgeführt und enthält grundlegende Konfigurationsparameter des Rechners 1, z.B. Angaben zur installierten Hardware etc. Anstelle des bei den weit verbreiteten Windows-PC mit x86-Prozessoren üblichen BIOS als Grundbetriebssystem 4 können auch andere, entsprechende beim Start des Rechners 1 ausgeführte Startprogramme verwendet werden. Weiter enthält der Rechner 1 eine interne Festplatte 5 (HD), auf der ein Betriebssystem 6 (OS) des Rechners 1 sowie weitere Programme und Daten gespeichert sind. Der Rechner 1 kann in bekannter Weise mit dem eigenen Betriebssystem 6 (OS) gestartet und betrieben werden.

Eine Datensicherung wird wie folgt ermöglicht.

Über eine USB-Schnittstelle 7 ist über ein USB-Kabel 8 eine erfindungsgemäße Datensicherungsvorrichtung in Form einer externen Sicherungsfestplatte 10 mit einer eigenen USB-Schnittstelle 8' angeschlossen. Anstelle einer USB-Verbindung können auch andere Schnittstellen und Festplattenarten verwendet werden, z.B. parallele oder serielle wie ATA (IDE, EIDE), Serial-ATA, e-SATA, IEEE 1394 (Firewire), SCSI u.v.m. Die externe Sicherungsfestplatte 9 kann als klassische Festplatte mit rotierendem Speichermedium oder auch als zwischenzeitlich verfügbare Festplatten mit Flashspeichern (Solid State Disk, SSD) oder eine Kombination aus beidem ausgebildet sein, wobei auch andere Ausbildungen verwendet werden können. Die Verwendung der USB-Festplatte 9 für die Datensicherungsvorrichtung weist den Vorteil auf, dass diese keine eigene Stromversorgung benötigt, sondern über die USB-Verbindung vom Rechner 1 mit Strom versorgt wird.

In Fig. 2 ist die Sicherungsfestplatte 9 nochmals schematisch im Detail gezeigt. Diese weist ein physikalisches Speichermedium 10 auf, welches in an sich bekannter Weise in Partitionen aufgeteilt ist, vorliegend einen Master Boot Record 11 (MBR), eine Systempartition 12 und eine Datenpartition 13. Gegebenenfalls können noch weitere Partitionen auf dem Speichermedium 10 vorhandenen sein, und auch andere Strukturen und Aufteilungen können verwendet werden. So kann eine nicht in Fig. 2 gezeigte Auslagerungspartition zur Erweiterung des Arbeitsspeichers des Rechners 1 vorgesehen sein, um bei fehlendem oder zu kleinem Arbeitsspeicher 3 (RAM) und/oder Auslagerungsspeicher des Rechners 1 die Datensicherung dennoch durchführen und ggf. beschleunigen zu können.

In einem Master Boot Record 11 (MBR) der Sicherungsfestplatte 9 sind grundlegende Angaben über die Aufteilung der Sicherungsfestplatte 9 sowie ein Urlader zum Starten eines auf Ein-/Ausgabe-optimierten Sicherungsbetriebssystems (Backup-Operating-System BOS) in der Systempartition 12 angegeben ist. Auf der Systempartition 12 befindet sich weiter ein Datensicherungsprogramm DSP. Die Systempartition 12 benötigt nur wenig Speicherplatz, beispielsweise wenige Gigabyte.

Die Datenpartition 13 hingegen weist möglichst viel Speicherplatz auf und dient zur Sicherung, also bevorzugt komprimierten, Speicherung der auf der Festplatte 5 des Rechners 1 befindlichen Daten. In der Datenpartition 13 werden zudem ein Sicherungsprofil und ein Wiederherstellungsprofil für die Festplatte 5 gespeichert, welche vom Datensicherungsprogramm DSP angelegt, insbesondere automatisch erstellt wurden.

Maßgeblich für die Erfindung ist, dass das Grundbetriebssystem 4 (BIOS) vor dem Laden und Ausführen des Betriebssystems 6 des Rechners 1 ausgeführt wird, und dass im Grundbetriebssystem 4 eingestellt ist, dass zuerst von der über die USB-Schnittstelle 7 angeschlossenen externen Sicherungsfestplatte 9 gebootet wird. Falls dort keine Sicherungsfestplatte angeschlossen ist, wird in üblicher Weise vom nächsten im Grundbetriebssystem 4 eingestellten Ziel gebootet. Weiter ist im MBR 11 der Sicherungsfestplatte 9 die Systempartition 12 als Bootpartition deklariert, so dass beim Start des Rechners 1 der Urlader der Sicherungsfestplatte 9 nach Aufforderung durch das Grundbetriebssystem 4 das Sicherungsbetriebssystem BOS der Sicherungsfestplatte 9 startet, und nicht das Betriebssystem 6 des Rechners 1. Das Sicherungsbetriebssystem BOS startet dann das in der Systempartition 12 gespeicherte Datensicherungsprogramm DSP.

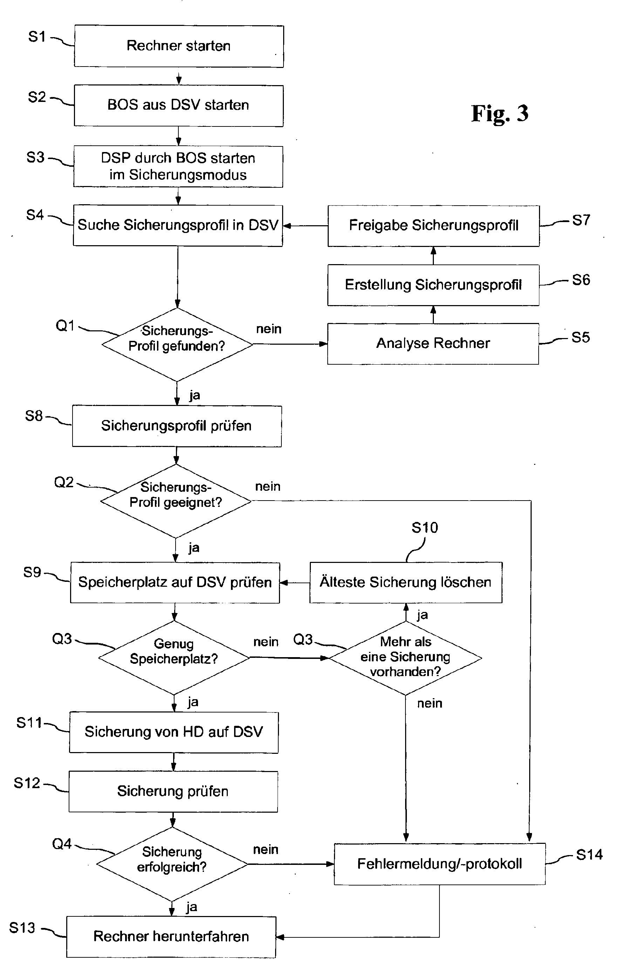

Anhand des Ablaufdiagramms in Fig. 3 wird nun eine Datensicherung mit der Sicherungsfestplatte 9 beschrieben, wobei nur die für die Datensicherung an sich maßgeblichen Punkte erläutert werden. Die detaillierte Ausführung ist dem Fachmann an sich geläufig.

Vor Schritt S1 muss, wie oben ausführlich angegeben, die Sicherungsfestplatte 9 wie in Fig. 1 gezeigt an den Rechner 1 angeschlossen werden und sichergestellt sein, dass der Rechner 1 von der Sicherungsfestplatte 9 booten kann.

In Schritt S1 wird dann der Rechner 1 gestartet, üblicherweise durch Einschalten der Stromversorgung 1 (Kaltstart). Alternativ kann der Rechner 1 auch durch Herunterfahren (Reset) und Neustarten (Warmstart) gestartet werden. In bekannter Weise wird dann zunächst das Grundbetriebssystem 4 (BIOS) gestartet, welches u.a. die Hardware erkennt und dann das Sicherungsbetriebssystem BOS von der Sicherungsfestplatte 9 startet.

Im Schritt S3 startet das Sicherungsbetriebssystem BOS dann das Datensicherungsprogramm DSP aus der Systempartition 12. Somit wird sichergestellt, dass die Datensicherung ohne Nutzung des Betriebssystems OS des Rechners 1 vollautomatisch ausgeführt werden kann.

Fakultativ kann noch vorgesehen werden, dass vor Schritt S3 eine Eingabe vom Benutzer angefordert wird, ob eine Datensicherung oder eine Datenwiederherstellung durchgeführt werden soll.

Anschließend sucht das Datensicherungsprogramm DSP in Schritt S4 in der Datenpartition 13 der Sicherungsfestplatte 9 nach einem Sicherungsprofil, in dem die für die Durchführung der eigentlichen Sicherung von der internen Festplatte 5 auf die Datenpartition 13 maßgeblichen Parameter gespeichert sind. Wird kein passendes Sicherungsringprofil gefunden, wird bei der Verzweigung Q1 automatisch zu Schritt S5 abgezweigt. Dies ist üblicherweise der Fall beim erstmaligen Durchführen der Datensicherung mit der Sicherungsfestplatte 9 am Rechner 1.

In Schritt S5 wird dann der Rechner 1 analysiert, wobei im Rahmen einer automatischen Konfiguration bzw. Selbstkonfiguration im wesentlichen drei Parameter (einschließlich weitere Optionen), bevorzugt zwei Hauptparameter, für die automatische Durchführung der Datensicherung ermittelt werden.

Zuerst wird festgestellt, welche Daten von der internen Festplatte 5 des Rechners 1 gesichert werden sollen, sprich, von welcher Partition der Festplatte 5 gesichert werden soll. Hierzu wird durch das Datensicherungsprogramm DSP vorteilhaft in an sich bekannter Weise ermittelt, welche Partition der Festplatte 4 das Betriebssystem 6 des Rechners 1 enthält, und diese Partition wird dann als Sicherungsquelle festgelegt.

Anschließend wird festgelegt, wohin die zu sichernden Daten gesichert, also gespeichert werden sollen. Hier ist ein wesentlicher Vorteil der vorliegenden Erfindung, insbesondere also für die vollautomatische Ausführung der Datensicherung, dass im Datensicherungsprogramm DSP bereits voreingestellt werden kann, dass die zu sichernden Daten in der Datenpartition 13 gespeichert werden sollen, die Datenpartition 13 wird also fest als Sicherungsziel voreingestellt. Hierdurch, also durch die automatische Festlegung für Sicherungsquelle und Sicherungsziel, wird dem Benutzer des Rechners 1 also die Entscheidung abgenommen, was gesichert werden soll und wohin gesichert werden soll.

Zudem wird im Schritt S5 durch das Datensicherungsprogramm DSP vorteilhaft, insbesondere vollautomatisch, in an sich bekannter Weise ermittelt und bestimmt, welche weiteren Optionen verwendet werden sollen, beispielsweise Komprimierungsmethode, Komprimierungsstufe etc. Diese Optionen werden vorteilhaft voreingestellt, können vom Datensicherungsprogramm DSP aber auch geändert werden. So werden beispielsweise bei einer sehr großen zu sichernden Festplatte 5 die zu speichernden Daten beim Schreiben auf die Datenpartition stärker komprimiert als bei einer kleinen zu sichernden Festplatte, oder die Komprimierung wird abhängig von dem noch auf der Datenpartition 13 vorhandenen Speicherplatz vorgegeben.

Danach wird in Schritt S6 das Sicherungsprofil in der Datenpartition 13 schreibgeschützt gespeichert. Gegebenenfalls kann in dem fakultativen Schritt S7 noch eine Freigabe des Sicherungsprofils durch den Benutzer angefordert werden.

Gleichermaßen wird parallel oder nach der Suche und ggf. Erstellung des Sicherungsprofils in den Schritten S4 und der Verzweigung Q1 bzw. Schritten S5, S6 und S7 überprüft, ob ein Wiederherstellungsprofil in der Datensicherungsvorrichtung 9 respektive der Datenpartition 13 für die zu sichernde Festplatte 5 vorhanden ist. Falls nicht, wird analog zu den Schritten S5 bis S7 ein Wiederherstellungsprofil erstellt, in dem insbesondere genaue Angaben zum Wiederherstellungsziel, also der Sicherungsquelle des Sicherungsprofils, abgelegt werden. Auch dies kann vollautomatisch erfolgen. Das Wiederherstellungsprofil wird vorteilhaft so wie das Sicherungsprofil auch in der Datenpartition 13 schreibgeschützt gespeichert.

Daraufhin wird nochmals in Schritt S4 nach dem nunmehr vorhandenen Sicherungsprofil auf der Datenpartition 13 gesucht, welches nun auch gefunden wird. Die Verzweigung Q1 leitet dann zu Schritt S8 über, in dem geprüft wird, ob die im gefundenen Sicherungsprofil gespeicherten Angaben und/oder Parameter für die Durchführung der Datensicherung geeignet sind.

Ist das Sicherungsprofil in Verzweigung Q2 als geeignet befunden worden, sind also alle Parameter für die Datensicherung in Ordnung, wird anschließend in Schritt S9 geprüft, ob auf der Datenpartition 13 noch ausreichend Speicherplatz für die vollständige Datensicherung der Festplatte 5 frei ist. Falls nicht und falls auf der Datenpartition 13 mehr als ein Sicherungsabbild der Festplatte 5 vorhanden ist, wird in Schritt S10 die älteste Sicherung gelöscht und dann erneut Schritt S9 ausgeführt. Das Löschen älterer Sicherungen erfolgt vorteilhaft solange, bis genug Speicherplatz oder nur noch eine Sicherung auf der Datenpartition 13 vorhanden ist. In letzterem Fall wird dann im Schritt S14 eine Fehlermeldung ausgegeben und/oder ein Fehlerprotokoll erstellt und auf der Datenpartition 13 abgespeichert. Anschließend wird unmittelbar nach Schritt S14 zum Schritt S13 übergegangen, der Rechner 1 wird also ordnungsgemäß heruntergefahren.

Bei ausreichendem Speicherplatz auf der Datenpartition 13 werden anschließend im Schritt S 11 die zu sichernden Daten der Festplatte 5 auf die Datenpartition 13 gesichert, also gespeichert. Bevorzugt wird vorliegend ein sogenanntes Image oder Abbild der zu sichernden Partition der Festplatte 5 auf der Datenpartition erstellt, welches in an sich bekannter Weise unabhängig vom Dateisystem der zu sichernden Festplatte 5 bzw. der zu sichernden Partition ist. Es wird also ein exaktes Abbild der zu sichernden Partition erstellt, so dass eine zerstörte Partition in lauffähigem Zustand wiederhergestellt werden kann.

Ist die Sicherung vollständig durchgeführt worden, wird im Schritt S12 geprüft, ob sie erfolgreich war. Ist dies der Fall, so wird in Schritt S13 der Rechner 1 heruntergefahren.

Ist in Verzweigung Q2 das Sicherungsprofil als nicht geeignet befunden worden, ist also mindestens ein Parameter aus dem Sicherungsprofil nicht in Ordnung, so wird in Schritt S14 eine Fehlermeldung ausgegeben und/oder ein Fehlerprotokoll erstellt und auf der Datenpartition 13 abgespeichert. Gleiches gilt für den Fall, wenn in Verzweigung Q4 die Sicherung nicht erfolgreich durchgeführt wurde. In beiden Fällen wird unmittelbar nach Schritt S14 zu Schritt S13 übergegangen, der Rechner wird also ordnungsgemäß heruntergefahren.

Die einzelnen Sicherungsabbilder auf der Sicherungsfestplatte 9 werden vollautomatisch verwaltet. Das heißt, der Benutzer braucht sich insbesondere nicht darum zu kümmern, dass auf der Sicherungsfestplatte 9 bzw. der Datenpartition 13 noch genug Speicherplatz vorhanden ist, um das nächste Sicherungsabbild aufzunehmen. Vor jeder neuen Sicherung kontrolliert das Datensicherungsverfahren nach Fig. 3, ob genug freier Speicherplatz zur Verfügung steht, wie oben beschrieben.

Will der Benutzer den Rechner 1 nach erfolgter oder auch nicht geglückter Datensicherung wieder normal benutzen, so entfernt er einfach die Sicherungsfestplatte 9 vom Rechner 1 und startet den Rechner 1 neu. Der Rechner 1 fährt dann in üblicher Weise hoch und benutzt das eigene Betriebssystem 6 seiner Festplatte 5 anstelle des Sicherungsbetriebssystems BOS der Sicherungsfestplatte 9.

Das erfindungsgemäße Datensicherungsverfahren und die erfindungsgemäße Datensicherungsvorrichtung weisen den wesentlichen Vorteil auf, dass sie vollautomatisch und ohne Nutzung des Betriebssystems 6 des Rechners 1 durchgeführt werden können. Insbesondere ermöglicht das vorherige Festlegen des Sicherungsziels auf der Sicherungsfestplatte 9 eine vollautomatische Datensicherung, bei der der Benutzer selbst nichts mehr einstellen muss. Der Benutzer schließt zur Datensicherung lediglich die Sicherungsfestplatte 9 am Rechner 1 an und schaltet diesen dann ein. Alle weiteren Schritte werden dann ohne sein Zutun und unabhängig vom Betriebssystem 6 des Rechners 1 durch die Datensicherungsvorrichtung und das Datensicherungsverfahren durchgeführt.

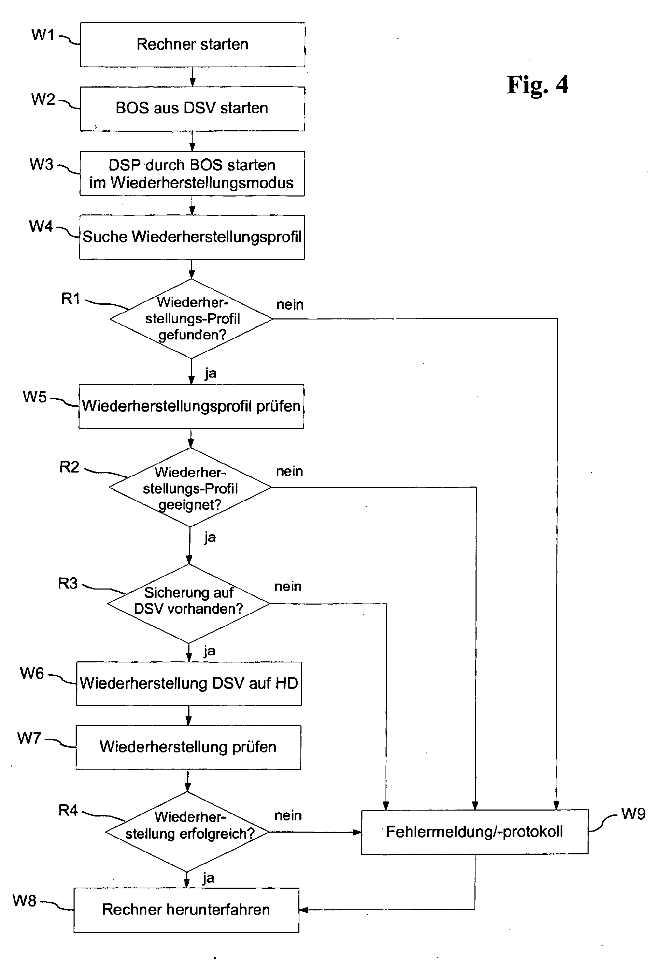

Möchte der Benutzer das auf der Sicherungsfestplatte 9 gespeicherte Abbild der Partition der internen Festplatte 5 des Rechners wiederherstellen, so wird vorteilhaft nach Fig. 4 vorgegangen. Soweit sich Schritte des Datensicherungsverfahrens in Fig. 3 und der Wiederherstellungsverfahrens in Fig. 4 entsprechen, wird auf die Beschreibung zu Fig. 3 verwiesen.

Zunächst wird in Schritten W1 und W2 der Rechner 1 und das Sicherungsbetriebssystem BOS gestartet wie in Fig. 3. Dann wird im Schritt W3 die Datenwiederherstellung gestartet. Ggf. kann vorgesehen werden, dass vor Schritten W3 und S3 eine Eingabe vom Benutzer angefordert wird, ob eine Datensicherung oder eine Datenwiederherstellung durchgeführt werden soll, wobei dann abhängig von der Eingabe nach Fig. 3 oder 4 vorgegangen wird. Erfolgt innerhalb einer vorgegebenen Wartezeit keine Eingabe, so wird standardmäßig zur vollautomatischen Datensicherung im Sicherungsbetriebssystem BOS voreingestellt, dass nach einer vorgegebenen Wartezeit automatisch die Datensicherung durchgeführt wird, wenn keine Eingabe des Benutzers zur Durchführung der Datenwiederherstellung erfolgt. Standardmäßig wird dann bei Ausbleiben der Eingabe nach Ablauf der Wartezeit die Datensicherung, und nicht die Datenwiederherstellung durchgeführt.

Wählt der Benutzer die Datenwiederherstellung, so erfolgt entsprechend, wie im Schritt S4, im Schritt W4 eine Suche nach einem geeigneten Wiederherstellungsprofil in der Datenpartition 13. Wird kein Wiederherstellungsprofil gefunden, so wird von Verzweigung R1 in Schritt W9 übergegangen und eine Fehlermeldung ausgegeben und/oder ein Fehlerprotokoll erstellt und auf der Datenpartition 13 abgespeichert. Anschließend wird in Schritt W8 der Rechner 1 heruntergefahren.

Wird in Schritt W4 ein Wiederherstellungsprofil gefunden, so geht Verzweigung R1 zu Schritt W5, in dem das Wiederherstellungsprofil, insbesondere seine Parameter geprüft werden. Bei Eignung des Wiederherstellungsprofils, also bei Eignung all seiner Parameter, wird nach Verzweigung R2 in Verzweigung R3 geprüft, ob ein dem Wiederherstellungsprofil entsprechendes Sicherungsabbild auf der Datenpartition 13 vorhanden ist. Im positiven Fall wird dann im Schritt W6 die wiederherzustellende Partition der Festplatte 5 wiederhergestellt und anschließend geprüft, ob die Wiederherstellung erfolgreich war. Falls ja, wird dann in Verzweigung R4 zu Schritt W8 übergegangen und der Rechner 1 heruntergefahren.

Werden in den Verzweigungen R1 bis R4 die "Nein"-Pfade gewählt, so wird vorteilhaft jeweils eine Fehlermeldung ausgegeben und/oder ein Fehlerprotokoll erstellt und auf der Datenpartition 13 abgespeichert. Anschließend wird unmittelbar nach Schritt W9 zu Schritt W8 übergegangen, der Rechner 1 also ordnungsgemäß heruntergefahren. Ggf. kann die Fehlermeldung in Schritt W9 auch solange angezeigt werden, bis der Benutzer diese quittiert oder eine vorgegebene Wartezeit abgelaufen ist.

Das erfindungsgemäße Datensicherungsverfahren und die erfindungsgemäße Datensicherungsvorrichtung weisen den wesentlichen Vorteil auf, dass die Wiederherstellung von früher auf der Datensicherungsvorrichtung gesicherten Daten des Rechners vollautomatisch durchgeführt werden kann. Der Anwender muss bei der Datenwiederherstellung, wie auch bei der Sicherung, nichts anderes tun, als die Datensicherungsvorrichtung an den Rechner anzuschließen und ggf. nach einer Abfrage, ob eine Datensicherung oder eine Datenwiederherstellung durchgeführt werden soll, nichts mehr weiter tun, da die nachfolgenden Schritte erfindungsgemäß vollautomatisch erfolgen. Mit diesem Datensicherungsverfahren und dieser Datensicherungsvorrichtung kann der Benutzer also, sogar beim nicht lauffähigen Betriebssystem des Rechners (1), vollautomatische Wiederherstellung der Daten durchführen. Mit dem vollautomatischen Wiederherstellungsverfahren ist immer gewährleistet, dass alle Daten an dem richtigen Ursprungsort ordnungsgemäß wiederhergestellt werden.

## Patentansprüche

1. Datensicherungsverfahren zur vollautomatischen Sicherung von Daten von einem Festspeicher (5) eines Rechners (1) auf eine an dem Rechner (1) angeschlossene, bootfähige Datensicherungsvorrichtung (9) mit einem beschreibbaren Speichermedium (10) mit darin gespeichertem Sicherungsbetriebssystem (BOS) und Datensicherungsprogramm (DSP) sowie einem Startspeicherbereich (11, MBR) mit einem darin gespeicherten Urlader, wobei der Rechner (1) ein Grundbetriebssystem (4, BIOS) aufweist, mit den Schritten:
a) Starten des Rechners (1),
b) Laden des Sicherungsbetriebssystems (BOS) durch den Urlader in den Rechner (1) und Aufrufen des Sicherungsbetriebssystems (BOS) der Datensicherungsvorrichtung (9) durch das Grundbetriebssystem (4, BIOS) des Rechners (1) beim Starten des Rechners,
c) Aufrufen des Datensicherungsprogramms (DSP) durch das Sicherungsbetriebssystems (BOS),
und **gekennzeichnet durch** die Schritte:
c1) Prüfen, ob in dem Speichermedium (10) noch ausreichend Speicherplatz für die vollständige Datensicherung des Festspeichers (5) frei ist, und
c1a) falls ja, Durchführen von Schritt d), oder
c1b) falls nicht, Prüfen, ob in dem Speichermedium (10) mehr als eine Sicherung des Festspeichers (5) vorhanden ist, und falls ja, Löschen der ältesten Sicherung und Wiederholen des Schritts c1) mit c1a) oder clb), bis genug Speicherplatz oder nur noch eine Sicherung in dem Speichermedium (10) vorhanden ist, und in letzterem Fall Ausgeben einer Fehlermeldung und/oder Erstellen und Abspeichem eines Fehlerprotokolls in dem Speichermedium (10);
d) Sichern der zu sichernden Daten von dem Festspeicher (5) des Rechners (1) auf das Speichermedium (10) der Datensicherungsvorrichtung (9).

2. Datensicherungsverfahren nach Anspruch 1, **dadurch gekennzeichnet, dass** nach Schritt c) in der Datensicherungsvorrichtung (9, DSV) ein Sicherungsprofil mit Parametern für die Datensicherung gesucht wird.

3. Datensicherungsverfahren nach Anspruch 2, **dadurch gekennzeichnet, dass** einer der Parameter mindestens eine Sicherungsquelle ist, von der Daten gesichert werden sollen, und ein weiterer der Parameter das Speichermedium (10) als Sicherungsziel ist, auf das die zu sichernden Daten gesichert werden sollen.

4. Datensicherungsverfahren nach Anspruch 3, **dadurch gekennzeichnet, dass** die Sicherungsquelle bestimmt wird durch Bestimmen von Parametern des Festspeichers (5) bzw. seiner Speicherbereiche und der darauf gespeicherten Daten, Zuordnen von Wertungsmerkmalen zu diesen Parametern und anschließend Auswählen der Sicherungsquelle anhand aus den Wertungsmerkmalen gebildeten Wertungssummen,

5. Datensicherungsverfahren nach Anspruch 3 oder 4, **dadurch gekennzeichnet, dass** die Sicherungsquelle das physikalische Speichermedium von aus mehreren physikalischen Speichermedien ausgebildeten Festspeichern (5) und/oder der Speicherbereich des Festspeichers (5) ist, der das Betriebssystem (6, OS) des Rechners (1) enthält.

6. Datensicherungsverfahren nach einem der Ansprüche 2 bis 5, **dadurch gekennzeichnet, dass** für den Fall der Sicherung in Schritt d) nach oder während Schritt d) die Sicherung geprüft wird und für den Fall einer nicht erfolgreichen Sicherung eine Fehlermeldung ausgegeben und/oder ein Fehlerprotokoll erstellt wird.

7. Datensicherungsverfahren nach einem der Ansprüche 1 bis 6, **dadurch gekennzeichnet, dass** nach Schritt d) der Rechner (1) heruntergefahren wird.

8. Datensicherungsverfahren nach einem der Ansprüche 2 bis 5, **dadurch gekennzeichnet, dass** vor Schritt d) das Sicherungsprofil auf Eignung für die Durchführung der Sicherung geprüft wird, und bei Nichteignung Schritt d) nicht durchgeführt wird, sondern eine Fehlermeldung ausgegeben, ein Fehlerprotokoll erstellt und/oder der Rechner (1) heruntergefahren wird.

9. Datensicherungsverfahren nach einem der Ansprüche 1 bis 8, **dadurch gekennzeichnet, dass** im Grundbetriebssystem (4, BIOS) des Rechners (1) die Datensicherungsvorrichtung (9, DSV) als erstes Bootmedium eingestellt ist.

10. Datensicherungsvorrichtung (9, DSV) mit
• einer Schnittstelle (8') zur Verbindung mit einem Rechner (1) mit einem Festspeicher (5), von dem Daten gesichert werden sollen, und
• einem beschreibbaren Speichermedium (10) mit
- einem Startspeicherbereich (11, MBR) mit einem darin gespeicherten Urlader,
- einem Systemspeicherbereich (12) mit darin gespeichertem Sicherungsbetriebssystem (BOS) und Datensicherungsprogramm (DSP),
- und einem Datenspeicherbereich (13) zur Speicherung der von dem Rechner (1) zu sichernden Daten,
• wobei der Urlader eingerichtet ist, auf Anforderung eines Grundbetriebssystems (4, BIOS) des Rechners (1) beim Starten des Rechners (1) das Sicherungsbetriebssystem (BOS) in den Rechner (1) zu laden, und
• das Sicherungsbetriebssystem (BOS) zum automatischen Aufrufen des Datensicherungsprogramms (DSP) eingerichtet ist,
**dadurch gekennzeichnet, dass**
• das Datensicherungsprogramm (DSP) eingerichtet ist
c1) zum Prüfen, ob in dem Speichermedium (10) noch ausreichend Speicherplatz für die vollständige Datensicherung des Festspeichers (5) frei ist, und
cla) falls ja, Durchführen von Schritt d), oder
c1b) falls nicht, Prüfen, ob in dem Speichermedium (10) mehr als eine Sicherung des Festspeichers (5) vorhanden ist, und falls ja, Löschen der ältesten Sicherung und Wiederholen des Schritts c1) mit c1a) oder clb), bis genug Speicherplatz oder nur noch eine Sicherung in dem Speichermedium (10) vorhanden ist, und in letzterem Fall Ausgeben einer Fehlermeldung und/oder Erstellen und Abspeichern eines Fehlerprotokolls in dem Speichermedium (10);
d) zum automatischen Sichern der Daten des Festspeichers (5) des Rechners (1) in den Datenspeicherbereich (13).

11. Datensicherungsvorrichtung (9, DSV) nach Anspruch 10, **dadurch gekennzeichnet, dass** sie eine externe Sicherungsfestplatte (9), insbesondere eine USB-Festplatte, ist.

12. Datensicherungsvorrichtung (9, DSV) nach Anspruch 10 oder 11, **dadurch gekennzeichnet, dass** das Speichermedium (10) in einen Master-Boot-Record (11, MBR) als Startspeicherbereich, eine Systempartition (12) als Systemspeicherbereich und mindestens eine Datenpartition (13) als Datenspeicherbereich aufgeteilt ist.

13. Datensicherungsvorrichtung (9, DSV) nach Anspruch 12, **dadurch gekennzeichnet, dass** in dem Speichermedium (10) zusätzlich ein Auslagerungsspeicherbereich, insbesondere eine Auslagerungspartition, zur Erweiterung des Arbeitsspeichers des Rechners (1) vorgesehen ist.

14. Datensicherungsvorrichtung (9, DSV) nach einem der Ansprüche 101 bis 13, **dadurch gekennzeichnet, dass** in dem Sicherungsbetriebssystem (BOS) oder dem Datensicherungsprogramm (DSP) der Datenspeicherbereich (13) als Sicherungsziel für die zu sichernden Daten des Festspeichers (5) des Rechners (1) voreingestellt ist.

## Claims

1. Data-backup method for fully automatic backup of data from a read-only memory (5) of a computer (1) onto a bootable data-backup device (9) with a writable storage medium (10) connected to the computer (1) with a backup operating system (BOS) stored therein with a data-backup programme (DSP) and a start storage area (11, MBR) with an initial programme loader stored therein, the computer (1) exhibiting a basic operating system (4, BIOS), with the steps:
a) starting of the computer (1),
b) loading of the backup operating system (BOS) by the initial programme loader into the computer (1) and calling of the backup operating system (BOS) of the data-backup device (9) by the basic operating system (4, BIOS) of the computer (1) when the computer is started,
c) calling of the data-backup programme (DSP) by the backup operating system (BOS), and **characterised by** the steps:
c1) checking whether there is still sufficient free storage space in the storage medium (10) for complete data-backup of the read-only memory (5), and
c 1 a) if yes, execution of step d), or
c1b) if no, checking whether there is more than one backup of the read-only memory (5) in the storage medium (10) and if yes, deletion of the oldest backup and repetition of step c1) with c1a) or c1b) until sufficient storage space or just one backup is present in the storage medium (10), and in the latter case emission of an error message and/or creation and storage of an error report in the storage medium (10);
d) backup of the data to be backed up from the read-only memory (5) of the computer (1) onto the storage medium (10) of the data-backup device (9).

2. Data-backup method according to claim 1, **characterised in that** after step c) a backup profile with parameters for the data backup is sought in the data-backup device (9, DSV).

3. Data-backup method according to claim 2, **characterised in that** one of the parameters is at least one backup source from which data are to be backed up, and another of the parameters is the storage medium (10) as backup destination onto which the data to be backed up are to be backed up.

4. Data-backup method according to claim 3, **characterised in that** the backup source is determined by determination of parameters of the read-only memory (5) or of its storage areas and the data stored thereon, assignment of value attributes to these parameters and then selection of the backup source with reference to the value sums formed from the value attributes.

5. Data-backup method according to claim 3 or 4, **characterised in that** the backup source is the physical storage medium of read-only memories (5) formed from a plurality of physical storage media and/or the storage area of the read-only memory (5) which contains the operating system (6, OS) of the computer (1).

6. Data-backup method according to one of claims 2 to 5, **characterised in that** in the case of backup in step d) the backup is checked after or during step d) and in the case of an unsuccessful backup an error message is emitted and/or an error report is created.

7. Data-backup method according to one of claims 1 to 6, **characterised in that** after step d) the computer (1) is shut down.

8. Data-backup method according to one of claims 2 to 5, **characterised in that** before step d) the backup profile is checked for suitability for execution of the backup, and if unsuitable step d) is not executed but an error message is emitted, an error report is created and/or the computer (1) is shut down.

9. Data-backup method according to one of claims 1 to 8, **characterised in that** the data-backup device (9, DSV) is set as the first boot medium in the basic operating system (4, BIOS) of the computer (1).

10. Data-backup device (9, DSV) with
. an interface (8') for connection with a computer (1) with a read-only memory (5) from which data are to be backed up, and
. a writeable storage medium (10) with
- a start storage area (11, MBR) with an initial programme loader stored therein,
- a system storage area (12) with the backup operating system (BOS) stored therein and the data-backup programme (DSP),
- and a data storage area (13) for storage of the data to be backed up from the computer (1),
. wherein the initial programme loader is set up to load the backup operating system (BOS) into the computer (1) at the request of a basic operating system (4, BIOS) of the computer (1) when the computer (1) is started, and
. the backup operating system (BOS) is configured for automatic calling of the data-backup programme (DSP),
**characterised in that**
. the data-backup programme (DSP) is configured
c1) to check whether there is still sufficient free storage space in the storage medium (10) for complete data-backup of the read-only memory (5), and
c1a) if yes, to execute step d), or
c1b) if no, to check whether there is more than one backup of the read-only memory (5) present in the storage medium (10), and if yes, to delete the oldest backup and repeat step c1) with c1a) or c1b) until sufficient storage space or only one backup is present in the storage medium (10), and in the latter case to emit an error message and/or create and store an error report in the storage medium (10), d) for automatic backup of the data of the read-only memory (5) of the computer (1) in the data storage area (13).

11. Data-backup device (9, DSV) according to claim 10, **characterised in that** it is an external backup hard disk (9), in particular a USB hard disk.

12. Data-backup device (9, DSV) according to claim 10 or 11, **characterised in that** the storage medium (10) is partitioned into a master boot record (11, MBR) as start storage area, a system partition (12) as system storage area and at least one data partition (13) as data storage area.

13. Data-backup device (9, DSV) according to claim 12, **characterised in that** in addition a swapping storage area, in particular a swapping partition, is provided in the storage medium (10) to expand the main working memory of the computer (1).

14. Data-backup device (9, DSV) according to one of claims 10 to 13, **characterised in that** in the backup operating system (BOS) or the data-backup programme (DSP) the data storage area (13) is preset as the backup destination for the data to be backed up from the read-only memory (5) of the computer (1).

## Revendications

1. Procédé de sauvegarde de données destiné à la sauvegarde entièrement automatisée de données d'une mémoire morte (5) d'un ordinateur (1) sur un dispositif de sauvegarde de données (9) capable d'amorçage, relié à l'ordinateur (1), doté d'un support de mémoire (10) inscriptible sur lequel sont enregistrés un système d'exploitation de sauvegarde (BOS) et un programme de sauvegarde de données (DSP), ainsi que d'un secteur de mémoire de démarrage (11, MBR) sur lequel est enregistré un chargeur d'amorçage, l'ordinateur (1) comportant un système d'exploitation de base (4, BIOS), avec les étapes suivantes :
a) démarrage de l'ordinateur (1),
b) chargement du système d'exploitation de sauvegarde (BOS) par le chargeur d'amorçage dans l'ordinateur (1) et appel du système d'exploitation de sauvegarde (BOS) du dispositif de sauvegarde de données (9) par le système d'exploitation de base (4, BIOS) de l'ordinateur (1) lors du démarrage de l'ordinateur,
c) appel du programme de sauvegarde de données (DSP) par le système d'exploitation de sauvegarde (BOS),
**caractérisé par** les étapes suivantes :
c1) vérification si suffisamment de place est encore libre dans le support de mémoire (10), pour la sauvegarde complète des données de la mémoire morte (5), et
c1a) si oui, exécution de l'étape d), ou
c1b) si non, vérification si, dans le support de mémoire (10) plus d'une sauvegarde de la mémoire morte (5) est présente et, si oui, supprimer la sauvegarde la plus ancienne et répétition de l'étape c1) avec c1a) ou c1b) jusqu'à ce qu'assez de place mémoire ou uniquement encore une sauvegarde soit présente dans le support de mémoire (10) et, dans le dernier cas, émettre un message d'erreur et/ou créer et enregistrer un rapport d'erreur dans le support de mémoire (10) ;
d) sauvegarde des données à sauvegarder de la mémoire morte (5) de l'ordinateur (1) dans le support de mémoire (10) du dispositif de sauvegarde de données (9).

2. Procédé de sauvegarde de données selon la revendication 1, **caractérisé en ce que**, après l'étape c), il est recherché dans le dispositif de sauvegarde de données (9, DSV) un profil de sauvegarde avec des paramètres pour la sauvegarde de données.

3. Procédé de sauvegarde de données selon la revendication 2, **caractérisé en ce qu'**un des paramètres est au moins une source de sauvegarde par laquelle les données doivent être sauvegardées et un autre des paramètres est le support de mémoire (10) en tant que cible de la sauvegarde, sur lequel les données à sauvegarder doivent être sauvegardées.

4. Procédé de sauvegarde de données selon la revendication 3, **caractérisé en ce que** la source de sauvegarde est déterminée par la détermination de paramètres de la mémoire morte (5) respectivement de ses secteurs de mémoire et des données enregistrées dans ces derniers, par l'attribution d'indices d'évaluation à ces paramètres et finalement par la sélection de la source de sauvegarde à l'aide de sommes d'évaluation formées d'après les indices d'évaluation.

5. Procédé de sauvegarde de données selon la revendication 3 ou 4, **caractérisé en ce que** la source de sauvegarde est le support de mémoire physique de mémoires mortes (5) formées de plusieurs supports de mémoire physiques et/ou du secteur mémoire de la mémoire morte (5) qui contient le système d'exploitation (6, OS) de l'ordinateur (1).

6. Procédé de sauvegarde de données selon l'une quelconque des revendications 2 à 5, **caractérisé en ce que**, pour le cas de la sauvegarde à l'étape d), après ou durant l'étape d), la sauvegarde est vérifiée et, pour le cas d'une sauvegarde non réussie, un message d'erreur est émis et/ou un rapport d'erreur est créé.

7. Procédé de sauvegarde de données selon l'une quelconque des revendications précédentes 1 à 6, **caractérisé en ce que**, après l'étape d), l'ordinateur (1) est éteint.

8. Procédé de sauvegarde de données selon l'une quelconque des revendications précédentes 2 à 5, **caractérisé en ce que**, avant l'étape d), le profil de sauvegarde est vérifié quant à son aptitude à l'exécution de la sauvegarde, et en cas de non-aptitude, l'étape d) n'est pas exécutée, mais au contraire un message d'erreur est émis, un rapport d'erreur est créé et/ou l'ordinateur (1) est arrêté.

9. Procédé de sauvegarde de données selon l'une quelconque des revendications 1 à 8, **caractérisé en ce que**, dans le système d'exploitation de base (4, BIOS) de l'ordinateur (1), le dispositif de sauvegarde de données (9, DSV) est configuré en tant que premier support d'amorçage.

10. Dispositif de sauvegarde de données (9, DSV) comportant :
- une interface (8') pour la liaison avec un ordinateur (1) ayant une mémoire morte (5) et par lequel des données doivent être sauvegardées, et
- un support de mémoire (10) inscriptible avec
- un secteur de mémoire de démarrage (11, MBR) dans lequel est enregistré un chargeur d'amorçage,
- un secteur mémoire système (12) dans lequel sont enregistrés un système d'exploitation de sauvegarde (BOS) et un programme de sauvegarde de données (DSP), et
- un secteur mémoire de données (13) pour l'enregistrement des données à sauvegarder par l'ordinateur (1),
- le chargeur d'amorçage étant configuré pour charger, à la demande d'un système d'exploitation de base (4, BIOS) de l'ordinateur (1), lors du démarrage de l'ordinateur (1), le système d'exploitation de sauvegarde (BOS) dans l'ordinateur (1), et
- le système d'exploitation de sauvegarde (BOS) est configuré pour l'appel automatique du programme de sauvegarde de données (DSP),
**caractérisé en ce que** :
- le programme de sauvegarde de données (DSP) est configuré :
c1) pour la vérification si, dans le support de mémoire (10), suffisamment de place mémoire est encore libre pour la sauvegarde complète des données de la mémoire morte (5), et
c1a) si oui, exécution de l'étape d), ou
c1b) si non, vérification si plus d'une sauvegarde de la mémoire morte (5) est présente dans le support de mémoire (10) et, si oui, suppression de la sauvegarde la plus ancienne et répétition de l'étape c1) avec c1a) ou c1b), jusqu'à ce qu'assez de place mémoire ou uniquement encore une sauvegarde soit présente dans le support de mémoire (10) et, dans le dernier cas, émission d'un message d'erreur et/ou création enregistrement d'un rapport d'erreur dans le support de mémoire (10) ;
d) pour la sauvegarde automatique des données de la mémoire morte (5) de l'ordinateur (1) dans le secteur mémoire de données (13).

11. Dispositif de sauvegarde de données (9, DSV) selon la revendication 10, **caractérisé en ce que** ledit dispositif est un disque dur de sauvegarde externe (9), en particulier un disque dur USB.

12. Dispositif de sauvegarde de données (9, DSV) selon la revendication 10 ou 11, **caractérisé en ce que** le support de mémoire (10) est reparti dans un enregistrement d'amorçage maître (11, MBR) en tant que secteur de mémoire de démarrage, dans une partition système (12) en tant que secteur mémoire système et au moins dans une partition de données (13) en tant que secteur mémoire de données.

13. Dispositif de sauvegarde de données (9, DSV) selon la revendication 12, **caractérisé en ce qu'**il est prévu en plus dans le support de mémoire (10) un secteur mémoire d'échange, en particulier une partition d'échange, destinée à l'extension de la mémoire de travail de l'ordinateur (1).

14. Dispositif de sauvegarde de données (9, DSV) selon l'une quelconque des revendications 10 à 13, **caractérisé en ce que**, dans le système d'exploitation de sauvegarde (BOS) ou dans le programme de sauvegarde de données (DSP), le secteur mémoire de données (13) est préconfiguré en tant que cible de la sauvegarde pour les données à sauvegarder de la mémoire morte (5) de l'ordinateur (1).
